(19) Europäisches Patentamt / European Patent Office / Office européen des brevets

(11) **EP 4 176 237 B1**

(12) **EUROPÄISCHE PATENTSCHRIFT**

(45) Veröffentlichungstag und Bekanntmachung des Hinweises auf die Patenterteilung:
**12.03.2025 Patentblatt 2025/11**

(21) Anmeldenummer: **21731763.5**

(22) Anmeldetag: **09.06.2021**

(51) Internationale Patentklassifikation (IPC):
**G01J 3/02** (2006.01) **G01J 3/18** (2006.01)
**G01J 3/28** (2006.01)

(52) Gemeinsame Patentklassifikation (CPC):
**G01J 3/0208; G01J 3/0205; G01J 3/0297; G01J 3/18; G01J 3/28; G01J 3/2823**

(86) Internationale Anmeldenummer:
**PCT/EP2021/065419**

(87) Internationale Veröffentlichungsnummer:
**WO 2022/008154 (13.01.2022 Gazette 2022/02)**

(54) **VERFAHREN ZUM ABSCHÄTZEN DES EINFLUSSES VON SPECKLE AUF EINE QUALITÄT EINER RADIOMETRISCHEN KALIBRATION EINES BILDGEBENDEN SPEKTROMETERS**

METHOD FOR ESTIMATING THE INFLUENCE OF SPECKLES ON A QUALITY OF A RADIOMETRIC CALIBRATION OF AN IMAGING SPECTROMETER

PROCÉDÉ D'ESTIMATION DE L'INFLUENCE DE GRANULARITÉS SUR UNE QUALITÉ D'UN ÉTALONNAGE RADIOMÉTRIQUE D'UN SPECTROMÈTRE D'IMAGERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.07.2020 DE 102020117786**

(43) Veröffentlichungstag der Anmeldung:
**10.05.2023 Patentblatt 2023/19**

(73) Patentinhaber: **Airbus Defence and Space GmbH 82024 Taufkirchen (DE)**

(72) Erfinder:
• **RICHTER, Florian**
  **82024 Taufkirchen (DE)**
• **KEIM, Corneli**
  **82024 Taufkirchen (DE)**
• **KRAUSER, Jasper**
  **82024 Taufkirchen (DE)**
• **WENIG, Mark**
  **80539 Muenchen (DE)**

(74) Vertreter: **Frenkel, Matthias Alexander Wuesthoff & Wuesthoff Patentanwälte und Rechtsanwalt PartG mbB Schweigerstraße 2 81541 München (DE)**

(56) Entgegenhaltungen:
• **BAZALGETTE COURREGES-LACOSTE GREGORY ET AL: "Spectral features on reference diffusers: measurements and analysis", PROCEEDINGS OF SPIE, vol. 5234, 8 September 2003 (2003-09-08), US, pages 304 - 313, XP055830772, ISSN: 0277-786X, ISBN: 978-1-5106-4374-1, DOI: 10.1117/12.510029**
• **RICHTER FLORIAN ET AL: "A novel measurement approach to quantify diffuser induced Spectral Features", PROCEEDINGS OF SPIE; [PROCEEDINGS OF SPIE; ISSN 0277-786X; VOL. 8615], SPIE, 1000 20TH ST. BELLINGHAM WA 98225-6705 USA, vol. 10785, 25 September 2018 (2018-09-25), pages 107851Y - 107851Y, XP060111804, ISBN: 978-1-5106-2099-5, DOI: 10.1117/12.2501943**

- FERRERIA LUIS ET AL: "Sentinel-5: a novel measurement approach to quantify diffuser induced spectral features", INTERNATIONAL CONFERENCE ON SPACE OPTICS - ICSO 2016, 25 September 2017 (2017-09-25), pages 1 - 9, XP055830217, DOI: 10.1117/12.2296079
- RICHTER FLORIAN ET AL: "Prediction model for diffuser-induced spectral features in imaging spectrometers", ATMOSPHERIC MEASUREMENT TECHNIQUES, vol. 14, no. 2, 26 February 2021 (2021-02-26), DE, pages 1561 - 1571, XP055829420, ISSN: 1867-1381, Retrieved from the Internet <URL:http://dx.doi.org/10.5194/amt-14-1561-2021> [retrieved on 20210806], DOI: 10.5194/amt-14-1561-2021

**Beschreibung**

Die Erfindung betrifft ein Verfahren zum Abschätzen des Einflusses von Speckle auf eine Qualität einer radiometrischen Kalibration eines bildgebenden Spektrometers, insbesondere eines bildgebenden Weltraumspektrometers.

Bildgebende Spektrometer sind bekannte Instrumente, die dazu eingesetzt werden, hyperspektrale Datensätze zu erfassen. Das Datenprodukt eines abbildenden Spektrometers besteht aus einer Ortskoordinate, einer spektralen Koordinate, sowie einer Intensitätsachse. Wenn das Instrument in einer bestimmten zeitlichen Abfolge unterschiedliche Sichtfelder beobachtet, kann sich eine zweite Ortskoordinate ergeben. Einsatz finden derartige bildgebende Spektrometer regelmäßig in Flugzeugen oder Satelliten, wo sie als fernerkundende Sensoren verwendet werden können.

Die zentralen Komponenten eines bildgebenden Spektrometers umfassen typischerweise, eine Teleskopanordnung, einen Eingangsspalt, ein dispersives Element und einen zweidimensionalen Detektor mit mehreren Detektorpixeln. Mittels des Spalts wird eine räumliche Bildzeile ausgewählt, die aufgrund einer Überlagerung mehrerer spektraler Komponenten multispektral ist und sich in eine erste Raumrichtung erstreckt. Das Licht dieser Bildzeile wird dann mittels des dispersiven Elements in eine zweite Raumrichtung dispergiert, typischerweise senkrecht zur ersten Raumrichtung. Das sich ergebende zweidimensional Bild enthält somit eine Ortsinformation und eine Spektralinformation und kann mit dem zweidimensionalen Detektor aufgenommen werden. Eine zweite Ortskoordinate kann abgetastet werden, indem mehrere zueinander verschobene Bildzeilen aufgenommen werden.

Je nach Einsatzgebiet sind bildgebende Spektrometer verschiedenen Einflussgrößen ausgesetzt, die eine radiometrische Kalibration erforderlich machen. Hierzu gehören insbesondere für Spektrometer, die in Satelliten eingesetzt werden, eine atmosphärische Absorption und Lichtstreuung. Generell wirken sich zudem die optischen Eigenschaften der Komponenten auf das Messergebnis des Spektrometers aus.

Bei einer radiometrischen Kalibration wird ein Diffusor vor der Teleskopanordnung angeordnet, um Licht, insbesondere Sonnenlicht, homogen in das Instrument zu streuen. Somit kann eine Intensitätsachse in einer Ebene des Detektors kalibriert werden. Hierbei treten sogenannte Speckle auf, also körniger, unregelmäßiger Interferenzmuster, die durch zufällige Streuzentren im Diffusor verursacht und vom Detektor wahrgenommen werden.

In der Praxis ist im Zusammenhang mit einer durchgeführten radiometrischen Kalibration entscheidend, wie groß ein durch die Speckle verursachter Fehler ist, bzw. ob dieser Fehler klein genug ist, dass die Kalibration verwendbar ist.

Der vorliegenden Erfindung liegt daher die Aufgabe zugrunde, eine einfache und zuverlässige Abschätzung des Einflusses von Speckle auf eine Qualität einer radiometrischen Kalibration zu ermöglichen.

Aus dem Stand der Technik ist das Dokument "Spectral features on reference diffusers: measurements and analysis", von Courreges-Lacoste et al., aus "Proceedings of SPIE - The International Society for Optical Engineering" bekannt. Das Dokument beschreibt den Ursprung von Spectral Features, sowie die Messung um jene Eigenschaften zu reproduzieren und zu charakterisieren.

Aus dem Stand der Technik ist das Dokument "A novel measurement approach to quantify diffuser induced Spectral Features", von F. Richter et al. aus "Proc. SPIE 10785, Sensors, Systems, and Next-Generation Satellites XXII" bekannt. Darin wird eine Technik zur Charakterisierung von Spektralmerkmalen offenbart, die auf der direkten Erfassung monochromatischer Speckle-Muster am Eingangsspalt basiert. Dies ermöglicht die Beobachtung von spektralen Merkmalen unterhalb der spektralen und räumlichen Auflösung des Spektrometers. Die spektralen Merkmale werden aus verschiedenen beobachteten Speckle-Mustern abgeleitet, indem das reale Spektrometer in der Datenanalyse korrekt nachgeahmt wird.

Des Weiteren ist aus dem Stand der Technik das Dokument "Sentinel-5: a novel measurement approach to quantify diffuser induced spectral featuref" von T. Burn et al. aus "SPIE 10562, International Conference on Space Optics' bekannt. Das Dokument offenbart eine Messmethode zur Quantifizierung der durch Diffusoren verursachten spektralen Merkmale. Die Methode basiert auf der Erfassung monochromatischer Speckle-Muster im Spalt über einen fein abgetasteten Wellenlängenbereich. Die Spektralmerkmale am Spektrometerdetektor werden durch Nachbearbeitung ausgewertet, indem die erfassten Speckle-Muster entlang der spektralen Auflösung und der Detektorpixel integriert werden.

Diese Aufgabe wird erfindungsgemäß gelöst durch ein Verfahren mit den Merkmalen des Anspruchs 1. Weiterbildungen der Erfindung sind den abhängigen Ansprüchen zu entnehmen.

Ein erfindungsgemäßes Verfahren dient zum Abschätzen des Einflusses von Speckle auf eine Qualität einer radiometrischen Kalibration eines bildgebenden Spektrometers, wobei das Spektrometer einen Detektor mit mehreren Detektorpixeln und ein dispersives Element umfasst, das eine Dispersion k verursacht, wobei für die Kalibration Licht, insbesondere Sonnenlicht, durch einen Diffusor (12) in das Spektrometer eingekoppelt wird. Das Verfahren umfasst den Schritt eines Berechnens eines numerischen Kontrastwerts $C_{Detektor}$ als

$$C_{Detektor} = \frac{1}{\sqrt{M}}$$

wobei M einen Gesamtfreiheitsgrad für Einflussgrößen darstellt, die sich auf den vom Detektor messbaren Kontrast auswirken, wobei sich M aus mehreren Einzelfreiheitsgraden zusammensetzt, die einen Einzelfreiheitsgrad $M_{Polarisation}$, einen Einzelfreiheitsgrad $M_{Spektral}$ und einen Einzelfreiheitsgrad $M_{Pixel}$ umfassen, wobei $M_{Polarisation}$ von einer Polarisation des Lichts abhängt, das in das Spektrometer eintritt, wobei $M_{Spektral}$ von einer spektralen Auflösung $\lambda_{res}$ des Spektrometers und einer Korrelation zwischen spektral unterschiedlichen monochromatischen Intensitätsverteilungen abhängt, wobei $M_{Pixel}$ von einer Einzelpixelfläche $A_{Detektor}$ und einer Korrelationsfläche $A_{Speckle}$ eines Speckles abhängt, und wobei das Berechnen durchgeführt wird für eine Intensitätsverteilung, die als Superposition monochromatischer Intensitäten erhalten wird, die durch monochromatische Felder beschreibbar sind, die zirkulare komplexe Gauß'sche Variablen sind.

Hierdurch kann ein Verfahren bereitgestellt werden, das eine einfache und zuverlässige Abschätzung der Qualität einer Kalibration gestattet. Indem ein numerischer Kontrastwert berechnet wird, kann zuverlässig abgeschätzt werden, zu welchem Grad ein anfänglicher Kontrastwert verringert ist. Hieraus kann geschlussfolgert werden, in welcher Weise sich Speckle auf eine Kalibration auswirken, im Speziellen aufgrund einer durch diese verursachten Intensitätsmodulation.

Dem Berechnen können verschiedene physikalische Annahmen bezüglich des Sonnenlichts zugrunde liegen. Generell kann einfallendes Licht vom Diffusor gestreut werden, ehe es durch die optischen Komponenten des Spektrometers auf den Detektor fällt, wo eine Integration über einen bestimmten Zeitraum erfolgen kann, um Messwerte für die einzelnen Detektorpixel zu erhalten. Sonnenlicht kann bezogen auf den großen Abstand zwischen der Sonne und der Erde sowie des kleinen zugehörigen Einfallswinkels als spektral kohärent gelten. Eine zeitliche Kohärenz ist hingegen vergleichsweise klein. Erfolgt eine Integration auf dem Detektor für mehrere Sekunden, wie dies während der Kalibration der Fall sein kann, können Kreuzkorrelationsterme interferierender Felder unterschiedlicher Wellenlänge verschwinden. Die Intensitätsverteilung, welcher der Detektor ausgesetzt ist, kann daher, wie vorgesehen, als Superposition monochromatischer Intensitäten genähert werden. Typischerweise wirken sich Speckle-Intensitäten nur auf den Kontrast aus, wenn sie sich im Spektrometer auf Intensitätsbasis summieren. Andernfalls liefern Speckle üblicherweise keinen Freiheitsgrad.

Der numerische Kontrastwert kann gegenüber einem idealen Kontrastwert reduziert sein. Grundsätzlich kann der Kontrast $C_I$ für eine Intensitätsverteilung I, die von einer bestimmten Anzahl von Pixeln gemessen wird, als $C_I = \sigma_I / <I>$ definiert werden, wobei $\sigma_I$ die Standardabweichung von I und <I> der Mittelwert von I ist. Unter der erwähnten Annahme zirkularer komplexer Gauß'scher Variablen ist dieser anfängliche Kontrastwert $C_I$ = 1 für monochromatisches polarisiertes Licht. Die erfindungsgemäßen Berechnungsmethoden tragen dem Umstand Rechnung, dass dieser anfängliche Kontrastwert bei einem realen Spektrometer reduziert ist.

Ein geringer Rechenaufwand kann insbesondere dann erzielt werden, wenn bei dem Berechnen M als Produkt aus den Einzelfreiheitsgraden bestimmt wird. Beispielsweise kann gelten $M = M_{polarisation} \cdot M_{Spektral} \cdot M_{Pixel}$. Insbesondere liegt dem Berechnen die Annahme zugrunde, dass wenigstens einige oder sämtliche der Einzelfreiheitsgrade unabhängige Effekte beschreiben.

Gemäß einer Ausführungsform kann $M_{Polarisation}$ einen Wert zwischen 1 und 2 annehmen. Hierdurch kann eine Polarisation des Lichts berücksichtigt werden, das in das Spektrometer einfällt.

Ferner kann vorgesehen sein, dass dem Berechnen die Annahme zugrunde gelegt wird, dass die monochromatischen Felder spektral benachbarter monochromatischer Intensitätsverteilungen $I(\lambda)$ und $I(\lambda + \Delta\lambda)$ eine spektrale Korrelation $\mu_{spektral}(\Delta\lambda)$ und eine durch das dispersive Element hervorgerufene dispersive Korrelation $\mu_{Dispersion}(k\Delta\lambda)$ aufweisen, wobei $\lambda$ eine Wellenlänge ist und $\Delta\lambda$ einen spektralen Abstand zwischen den Intensitätsverteilungen bezeichnet. Hierdurch kann in wirksamer Weise die Annahme umgesetzt werden, die Intensitätsverteilung sei eine Superposition monochromatischer Intensitäten.

Es kann vorgesehen sein, dass eine Hilfsvariable B bestimmt wird als $B = \lambda_{res}/\Delta\lambda$, wobei eine Gesamtkorrelation bestimmt wird als $\mu = \mu_{spektral}(\Delta\lambda) \cdot \mu_{Dispersion}(k\Delta\lambda)$, und wobei bei dem Berechnen $M_{spektral}$ in Abhängigkeit von B und $\mu$ bestimmt wird. Ein zur spektralen Auflösung des Spektrometers gehörender Freiheitsgrad kann somit zuverlässig abgeschätzt werden.

Ein mit der Einzelpixelfläche und der Korrelationsfläche eines Speckles zusammenhängender Freiheitsgrad kann insbesondere dann geeignet abgeschätzt werden, wenn bei dem Berechnen $A_{Speckle}$ anhand eines zweidimensionalen Streubilds des Spektrometers bestimmt wird, das mit $|\mu_{spektral}(\mu\lambda)|^2$ und einer Autokorrelationsfunktion des Detektors, insbesondere eines Detektorpixels, gefaltet wird.

Generell kann bei dem Berechnen ein Flächenverhältnis $D = A_{Detektor} / A_{Speckle}$ bestimmt werden, wobei bei dem Berechnen $M_{Pixel}$ in Abhängigkeit von D bestimmt wird. Hierdurch kann einem Beitrag eines Pixel-Mittelungseffekts Rechnung getragen werden.

Des Weiteren kann bei dem Berechnen von $M_{Pixel}$ die Dispersion k des dispersiven Elements berücksichtigt werden. Hierdurch kann der zugehörige Freiheitsgrad genauer abgeschätzt werden.

Das Verfahren kann ferner den Schritt eines Vergleichens des numerischen Kontrastwerts mit einem Sollwert umfassen. Hierdurch kann ermittelt werden, ob ein bestimmter Diffusor in Kombination mit einem bestimmten Spektrometer für eine Kalibration geeignet ist oder nicht, bzw. zu welchem Grad sich vom Diffusor hervorgerufene Speckle auf diese auswirken.

Eine beispielhafte Ausführungsform der Erfindung wird nun anhand der beigefügten schematischen Zeichnungen näher erläutert, von denen

Figur 1     eine schematische Darstellung eines bildgebenden Spektrometers mit einer Steuereinheit zeigt;

Figur 2     einige optische Komponenten des bildgebenden Spektrometers schematisch darstellt; und

Figur 3     ein schematisches Ablaufdiagramm eines Verfahrens zum Quantifizieren der Qualität einer radiometrischen Kalibration des bildgebenden Spektrometers zeigt.

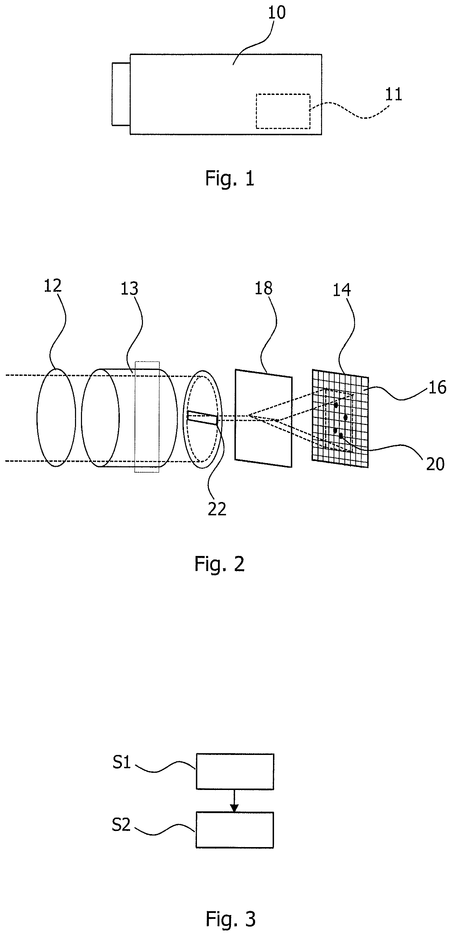

Figur 1 zeigt eine schematische Darstellung eines bildgebenden Spektrometers 10. Einige optische Komponenten des bildgebenden Spektrometers 10 sind in Figur 2 schematisch dargestellt. Das Spektrometer 10 umfasst eine Steuereinheit 11, die dazu eingerichtet und programmiert ist, das Spektrometer 10 zu steuern.

Das Spektrometer 10 umfasst eine Teleskopanordnung 13, die rein schematisch dargestellt ist und auf vielfältige Weise ausgebildet sein kann. Insbesondere kann es sich um eine Teleskopanordnung im weitesten Sinne handeln, die mittels geeigneter Spiegel oder anderer optischer Komponenten realisiert ist. Zudem umfasst das Spektrometer 10 einen Eingangsspalt 22, der eine erste räumliche Koordinate definiert. Ferner umfasst das Spektrometer ein dispersives Element 18, das eine Dispersion k verursacht. Das vom Eingangsspalt 22 durchgelassene Licht wird vom dispersiven Element 18 dispergiert, sodass eine Spektralkoordinate erzeugt wird, die auf eine zweite räumliche Koordinate abgebildet wird, die senkrecht zur ersten räumlichen Koordinate angeordnet ist. Das somit erzeugte zweidimensional Bild enthält bezüglich der ersten räumliche Koordinate eine Ortsinformation, bezüglich der zweiten räumlichen Koordinate eine Spektralinformation.

Das Spektrometer 10 umfasst des Weiteren einen Detektor 14 mit einem Array von Detektorpixeln 16, die aus Gründen der Übersichtlichkeit nicht alle mit Bezugszeichen versehen sind. Das erzeugte zweidimensionale Bild trifft auf den Detektor 14 und kann somit vom Spektrometer 10 erfasst werden. Hierzu kann die Steuereinheit 11 entsprechende Ausgangssignale des Detektors 14 geeignet verarbeiten.

Bei einer radiometrischen Kalibration wird ein Diffusor 12 vor der Teleskopanordnung 13 angeordnet, um einfallendes Licht homogen in das Spektrometer 10 einzukoppeln. Aufgrund der vom Diffusor 12 verursachten Streuung bildet sich auf dem Detektor 14 ein Interferenzmuster mit Speckle 20, die aus Gründen der Übersichtlichkeit nicht alle mit Bezugszeichen versehen sind.

Der Einfluss von Speckle auf die Qualität einer radiometrischen Kalibration kann mittels eines im Folgenden beschriebenen Verfahrens abgeschätzt werden.

In einem ersten Schritt S1 wird ein numerischer Kontrastwerts $C_{Detektor}$ als

$$C_{Detektor} = \frac{1}{\sqrt{M}}$$

bestimmt, wobei M einen Gesamtfreiheitsgrad für Einflussgrößen darstellt, die sich auf den vom Detektor 14 messbaren Kontrast auswirken, wobei sich M aus mehreren Einzelfreiheitsgraden zusammensetzt, die einen Einzelfreiheitsgrad $M_{Polarisation}$, einen Einzelfreiheitsgrad $M_{Spektral}$ und einen Einzelfreiheitsgrad $M_{Pixel}$ umfassen. Dabei hängt $M_{Polarisation}$ von einer Polarisation des Lichts ab, das in das Spektrometer (10) eintritt, $M_{Spektral}$ hängt von einer spektralen Auflösung $\lambda_{res}$ des Spektrometers 10 und einer Korrelation zwischen spektral unterschiedlichen monochromatischen Intensitätsverteilungen ab, und $M_{Pixel}$ hängt von einer Einzelpixelfläche $A_{Detektor}$ eines Detektorpixels und einer Korrelationsfläche $A_{Speckle}$ eines Speckles ab. Das Berechnen wird für eine Intensitätsverteilung durchgeführt, die als Superposition monochromatischer Intensitäten erhalten wird, die durch monochromatische Felder beschreibbar sind, die zirkulare komplexe Gauß'sche Variablen sind. Wie erwähnt kann das Berechnen in der Steuereinheit 11 durchgeführt werden.

In einem zweiten Schritt S2 wird der numerische Kontrastwert $C_{Detektor}$ mit einem Sollwert verglichen. Der Vergleich kann eine Differenzbildung, eine Quotientenbildung oder beliebige andere numerische Vergleichsmethoden umfassen.

Bei dem Berechnen im Schritt S1 wird M als Produkt aus den Einzelfreiheitsgraden bestimmt, d. h. es gilt $M = M_{polarisation} \cdot M_{Spektral} \cdot M_{Pixel}$.

$M_{Polarisation}$ nimmt abhängig von der Polarisation des einfallenden Lichts einen Wert zwischen 1 und 2 an.

Dem Berechnen im Schritt S1 wird die Annahme zugrunde gelegt wird, dass die monochromatischen Felder spektral benachbarter monochromatischer Intensitätsverteilungen $I(\lambda)$ und $I(\lambda + \Delta\lambda)$ eine spektrale Korrelation $\mu_{spektral}(\Delta\lambda)$ und eine durch das dispersive Element 18 hervorgerufene dispersive Korrelation $\mu_{Dispersion}(k\Delta\lambda)$ aufweisen, wobei $\lambda$ eine Wellenlänge ist und $\Delta\lambda$ einen spektralen Abstand zwischen den Intensitätsverteilungen bezeichnet. Dabei wird eine Hilfsvariable B als $B = \lambda_{res}/\Delta\lambda$ und eine Gesamtkorrelation als $\mu = \mu_{spektral}(\Delta\lambda) \cdot \mu_{Dispersion}(k\Delta\lambda)$ bestimmt. $M_{spektral}$ wir dann in Abhängigkeit von B und $\mu$ berechnet.

Ferner wird in Schritt S1 $A_{Speckle}$ anhand eines zweidimensionalen Beugungsbilds des Spektrometers 10 bestimmt, das mit $|\mu_{spektral}(\Delta\lambda)|^2$ sowie einer Autokorrelationsfunktion des Detektors gefaltet wird. Das Beugungsbild wird von der Form und Größe der System-Apertur bestimmt. Außerdem wird ein Flächenverhältnis $D = A_{Detektor} / A_{Speckle}$ bestimmt. $M_{Pixel}$ wird dann in Abhängigkeit von D bestimmt. Zudem wird hierfür die Dispersion k des dispersiven Elements berücksichtigt. Die Berücksichtigung der Dispersion k erfolgt mit der erwähnten Faltung.

## Patentansprüche

1. Verfahren zum Abschätzen des Einflusses von Speckle auf eine Qualität einer radiometrische Kalibration eines bildgebenden Spektrometers (10), wobei das Spektrometer (10) eine Teleskopanordnung (13), einen Detektor (14) mit mehreren Detektorpixeln (16) und ein dispersives Element (18), das eine Dispersion k verursacht, umfasst, und wobei für die Kalibration Licht, insbesondere Sonnenlicht, durch einen Diffusor (12) in das Spektrometer eingekoppelt wird,
umfassend den Schritt:
Berechnen (S1) eines numerischen Kontrastwerts $C_{Detektor}$ als

$$C_{Detektor} = \frac{1}{\sqrt{M}}$$

wobei M einen Gesamtfreiheitsgrad für Einflussgrößen darstellt, die sich auf den vom Detektor (14) messbaren Kontrast auswirken,
wobei sich M aus mehreren Einzelfreiheitsgraden zusammensetzt, die einen Einzelfreiheitsgrad $M_{Polarisation}$, einen Einzelfreiheitsgrad $M_{Spektral}$ und einen Einzelfreiheitsgrad $M_{Pixel}$ umfassen,
wobei $M_{Polarisation}$ von einer Polarisation des Lichts abhängt, das in das Spektrometer (10) eintritt,
wobei $M_{Spektral}$ von einer spektralen Auflösung $\lambda_{res}$ des Spektrometers (10) und einer Korrelation zwischen spektral unterschiedlichen monochromatischen Intensitätsverteilungen abhängt,
wobei $M_{Pixel}$ von einer Einzelfläche $A_{Detektor}$ eines Detektorpixels und einer Korrelationsfläche $A_{Speckle}$ eines Speckles abhängt, und
wobei das Berechnen durchgeführt wird für eine Intensitätsverteilung, die als Superposition monochromatischer Intensitäten erhalten wird, die durch monochromatische Felder beschreibbar sind, die zirkulare komplexe Gauß'sche Variablen sind.

2. Verfahren nach Anspruch 1,
wobei bei dem Berechnen (S1) M als Produkt aus den Einzelfreiheitsgraden bestimmt wird.

3. Verfahren nach Anspruch 1 oder 2,
wobei $M_{Polarisation}$ einen Wert zwischen 1 und 2 annimmt.

4. Verfahren nach einem der vorhergehenden Ansprüche,
wobei dem Berechnen (S1) die Annahme zugrunde gelegt wird, dass die monochromatischen Felder spektral benachbarter monochromatischer Intensitätsverteilungen $I(\lambda)$ und $I(\lambda + \Delta\lambda)$ eine spektrale Korrelation $\mu_{spektral}(\Delta\lambda)$ und eine durch das dispersive Element (18) hervorgerufene dispersive Korrelation $\mu_{Dispersion}(k\Delta\lambda)$ aufweisen, wobei $\lambda$ eine Wellenlänge ist und $\Delta\lambda$ einen spektralen Abstand zwischen den Intensitätsverteilungen bezeichnet.

5. Verfahren nach Anspruch 4,
wobei eine Hilfsvariable B bestimmt wird als B = $\lambda_{res}/\Delta\lambda$;
wobei eine Gesamtkorrelation bestimmt wird als $\mu = \mu_{spektral}(\Delta\lambda) \cdot \mu_{Dispersi\text{-} on}(k\Delta\lambda)$;
und wobei bei dem Berechnen (S1) $M_{spektral}$ in Abhängigkeit von B und $\mu$ bestimmt wird.

6. Verfahren nach Anspruch 4 oder 5,
wobei bei dem Berechnen (S1) $A_{Speckle}$ anhand eines zweidimensionalen Beugungsbilds des Spektrometers (10) bestimmt wird, das mit $|\mu_{spektral}(\Delta\lambda)^2$ und einer Autokorrelationsfunktion des Detektors (14) gefaltet wird.

7. Verfahren nach einem der vorhergehenden Ansprüche,
wobei bei dem Berechnen (S1) ein Flächenverhältnis D = $A_{Detektor} / A_{Speckle}$ bestimmt wird;
und wobei bei dem Berechnen (S1) $M_{Pixel}$ in Abhängigkeit von D bestimmt wird.

8. Verfahren nach Anspruch 7,
wobei bei dem Berechnen (S1) von $M_{Pixel}$ die Dispersion k des dispersiven Elements (18) berücksichtigt wird.

9. Verfahren nach einem der vorhergehenden Ansprüche,
ferner umfassend den Schritt eines Vergleichens (S2) des numerischen Kontrastwerts mit einem Sollwert.

## Claims

1. Method for estimating the influence of speckle on a quality of a radiometric calibration of an imaging spectrometer (10), wherein the spectrometer (10) comprises a telescope arrangement (13), a detector (14) with a plurality of detector pixels (16) and a dispersive element (18) which causes a dispersion k, and wherein light, in particular sunlight, is coupled into the spectrometer through a diffuser (12) for the calibration,

comprising the step:

calculating (S1) a numerical contrast value $C_{detector}$ as

$$C_{Detektor} = \frac{1}{\sqrt{M}}$$

where M represents a total degree of freedom for influencing variables that affect the contrast that can be measured by the detector (14),

where M is composed of several individual degrees of freedom, which comprise an individual degree of freedom $M_{polarization}$, an individual degree of freedom $M_{spectral}$ and an individual degree of freedom $M_{pixel}$,

where $M_{polarization}$ depends on a polarization of the light entering the spectrometer (10),

where $M_{spectral}$ depends on a spectral resolution $\lambda_{res}$ of the spectrometer (10) and a correlation between spectrally different monochromatic intensity distributions,

where $M_{Pixel}$ depends on a single area $A_{Detector}$ of a detector pixel and a correlation area $A_{Speckle}$ of a speckle, and

wherein the calculation is performed for an intensity distribution obtained as a superposition of monochromatic intensities describable by monochromatic fields which are circular complex Gaussian variables.

2. Method according to claim 1,
   wherein in the calculation (S1) M is determined as the product of the individual degrees of freedom.

3. Method according to claim 1 or 2,
   wherein $M_{polarization}$ assumes a value between 1 and 2.

4. Method according to any one of the preceding claims,
   wherein the calculation (S1) is based on the assumption that the monochromatic fields of spectrally adjacent monochromatic intensity distributions $I(\lambda)$ and $I(\lambda + \Delta\lambda)$ have a spectral correlation $\mu_{spectral}(\Delta\lambda)$ and a dispersive correlation $\mu_{disper-sion}(k\Delta\lambda)$ caused by the dispersive element (18), where $\lambda$ is a wavelength and $\Delta\lambda$ denotes a spectral distance between the intensity distributions.

5. Method according to claim 4,
   wherein an auxiliary variable B is determined as $B = \lambda_{res}/\Delta\lambda$;
   wherein an overall correlation is determined as

$\mu = \mu_{spectral}(\Delta\lambda) \cdot \mu_{disper-sion}(k\Delta\lambda)$;
   and wherein $M_{spectral}$ is determined as a function of B and $\mu$ when calculating (S1).

6. Method according to claim 4 or 5,
   wherein in the calculation (S1), $A_{Speckle}$ is determined using a two-dimensional diffraction image of the spectrometer (10) convolved with $|\mu_{spectral}(\Delta\lambda)|^2$ and an autocorrelation function of the detector (14).

7. Method according to any one of the preceding claims,

   wherein an area ratio $D = A_{detector} / A_{Speckle}$ is determined during the calculation (S1);
   and wherein $M_{pixel}$ is determined as a function of D when calculating (S1).

8. Method according to claim 7,
   wherein the dispersion k of the dispersive element (18) is taken into account when calculating (S1) $M_{pixel}$.

9. Method according to any one of the preceding claims,
   further comprising the step of comparing (S2) the numerical contrast value with a target value.

**Revendications**

1. Procédé d'estimation de l'influence de la granulation cohérence sur une qualité d'un étalonnage radiométrique d'un spectromètre (10) d'imagerie, dans lequel le spectromètre (10) comprend un agencement de télescope (13), un détecteur (14) présentant plusieurs pixels de détecteur (16) et un élément dispersif (18) qui provoque une dispersion k, et dans lequel une lumière, en particulier de la lumière solaire, étant couplée dans le spectromètre à travers un diffuseur (12) pour l'étalonnage,
   comprenant l'étape consistant à :
   calculer (S1) une valeur numérique de contraste $C_{Detektor}$ en tant que

$$C_{Detektor} = \frac{1}{\sqrt{M}}$$

   dans lequel M représente un degré de liberté total pour les variables d'influence qui ont des conséquences sur le contraste mesurable par le détecteur (14),
   dans lequel M se compose de plusieurs degrés de liberté individuels, qui comprennent un degré de liberté individuel $M_{Polarisation}$, un degré de liberté individuel $M_{Spektral}$ et un degré de liberté individuel $M_{Pixel}$,

dans lequel $M_{Polarisation}$ dépend d'une polarisation de la lumière qui entre dans le spectromètre (10),

dans lequel $M_{Spektral}$ dépend d'une résolution spectrale $\lambda_{res}$ du spectromètre (10) et d'une corrélation entre des distributions d'intensité monochromatiques spectralement différentes,

dans lequel $M_{Pixel}$ dépend d'une surface unique $A_{Detektor}$ d'un pixel de détecteur et d'une surface de corrélation $A_{Speckle}$ d'une granulation cohérente, et

dans lequel le calcul est effectué pour une distribution d'intensité qui est obtenue comme une superposition d'intensités monochromatiques qui peuvent être décrites par des champs monochromatiques qui sont des variables gaussiennes complexes circulaires.

2. Procédé selon la revendication 1,
dans lequel, dans le calcul (S1), M est déterminé comme le produit des degrés de liberté individuels.

3. Procédé selon la revendication 1 ou 2,
dans lequel $M_{Polarisation}$ adopte une valeur comprise entre 1 et 2.

4. Procédé selon l'une quelconque des revendications précédentes,
dans lequel le calcul (S1) se base sur l'hypothèse que les champs monochromatiques de distributions d'intensité monochromatiques spectralement voisines $I(\lambda)$ et $I(\lambda + \Delta\lambda)$ présentent une corrélation spectrale $\mu_{spektral}(\Delta\lambda)$ et une corrélation dispersive $\mu_{Dispersion}(k\Delta\lambda)$ provoquée par l'élément dispersif (18), dans lequel $\lambda$ est une longueur d'onde et $\Delta\lambda$ désigne une distance spectrale entre les distributions d'intensité.

5. Procédé selon la revendication 4,

dans lequel une variable auxiliaire B est déterminée en tant que $B = \lambda_{res}/\Delta\lambda$;
dans lequel une corrélation totale est déterminée en tant que $\mu = \mu_{spektral}(\Delta\lambda) \cdot \mu_{Dispersion}(k\Delta\lambda)$;
et dans lequel, dans le calcul (S1), $M_{spektral}$ est déterminé en fonction de B et de $\mu$.

6. Procédé selon la revendication 4 ou 5,
dans lequel, lors du calcul (S1), $A_{Speckle}$ est déterminé à l'aide d'une image de diffraction bidimensionnelle du spectromètre (10), qui est convoluée avec $|\mu_{spekt-ral}(\Delta\lambda)|^2$ et une fonction d'autocorrélation du détecteur (14).

7. Procédé selon l'une quelconque des revendications précédentes,

dans lequel, lors du calcul (S1), un rapport de surface $D = A_{Detektor} / A_{Speckle}$ est déterminé; et dans lequel, dans le calcul (S1), $M_{Pixel}$ est déterminé en fonction de D.

8. Procédé selon la revendication 7,
dans lequel, lors du calcul (S1) de $M_{pixel}$, la dispersion k de l'élément dispersif (18) est prise en compte.

9. Procédé selon l'une quelconque des revendications précédentes,
comprenant en outre l'étape consistant à comparer (S2) la valeur de contraste numérique à une valeur de consigne.

Fig. 1

Fig. 2

Fig. 3

# EP 4 176 237 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **COURREGES-LACOSTE et al.** Spectral features on reference diffusers: measurements and analysis. *Proceedings of SPIE - The International Society for Optical Engineering*
- **F. RICHTER et al.** A novel measurement approach to quantify diffuser induced Spectral Features. *Proc. SPIE 10785, Sensors, Systems, and Next-Generation Satellites XXII*
- **T. BURN et al.** Sentinel-5: a novel measurement approach to quantify diffuser induced spectral featuref. *SPIE 10562, International Conference on Space Optics*